# EUROPÄISCHE PATENTSCHRIFT

(11) **EP 1 631 051 B1**
(45) Veröffentlichungstag und Bekanntmachung des Hinweises auf die Patenterteilung: **02.06.2010**
(21) Anmeldenummer: 05017815.1
(22) Anmeldetag: 17.08.2005
(51) Int. Cl.: H04M 3/523, H04M 3/436

(54) **Verfahren und System mit lastabhängiger Filterung beim Anruf eines Dienstes**
Method and system providing load-dependent filtering when calling a service
Procédé et système fournissant un filtrage d'appel pour un service

(30) Priorität: 31.08.2004 DE 102004041963
(43) Veröffentlichungstag der Anmeldung: 01.03.2006
(73) Patentinhaber: Deutsche Telekom AG, 53113 Bonn (DE)
(72) Erfinder: Knittel, Tobias, 67169 Kallstadt (DE); Maier, Ralf, 67433 Neustadt (DE)

(56) Entgegenhaltungen:
- EP-A- 1 011 256
- EP-A- 1 296 502
- DE-A1- 10 300 277
- WENNERBERG M ET AL: "AN ADVANCED SERVICE CREATION ENVIRONMENT USING SIBS" ANNUAL REVIEW OF COMMUNICATIONS, NATIONAL ENGINEERING CONSORTIUM, CHICAGO, IL, US, Bd. 47, Januar 1993 (1993-01), Seiten 454-459, XP000455360 ISSN: 0886-229X

## Beschreibung

Die Erfindung betrifft ein Verfahren sowie ein System zum automatisierten Filtern von rufenden Endeinrichtungen beim Ruf zu einer Diensteinrichtung über ein Telekommunikationsnetz.

Bekanntermaßen können Anbieter eines Dienstes, wie z.B. einer Bestellhotline und/oder eines Call Centers, deren Telekommunikations-Dienstendeinrichtungen zum Anbieten des Dienstes durch eine jeweils Telekommunikationsnetzbasierte, einheitliche Dienst- oder Servicerufnummern individuell miteinander verschalten, wobei die Telekommunikations-Dienstendeinrichtungen selbst dem Telekommunikationsnetz, auf welchem die Dienst- oder Servicerufnummer basiert, und/oder anderen Telekommunikationsnetzen zugeordnet sein können.

Ein bestimmter Dienst ist dann von im Wesentlichen jeder Telekommunikationsendeinrichtung innerhalb des Telekommunikationsnetzes, auf welchem die Dienst- oder Servicerufnummer basiert, stets unter der gleichen Rufnummer durch einen Nutzer abrufbar, wobei die Telekommunikationsendeinrichtungen von Nutzern im Wesentlichen jedem beliebigen Telekommunikations-Subnetz des Telekommunikationsnetzes, auf welchem die Dienst- oder Servicerufnummer basiert, zugeordnet sein können.

Im deutschen Telekommunikationsnetz beispielsweise, sind für derartige Service-Rufnummern unter Anderem die Rufnummerbereiche 0190xxx, 0800xxx, 0180xxx reserviert. Service-Rufnummern sind häufig ferner mit einer für den Dienstanbieter und/oder für den Dienstnutzer individuellen Kostenstruktur belegbar, so dass hierüber auch das individuelle Anbieten von für den Nutzer kostenfreien Diensten und von für den Nutzer kostenpflichtigen Diensten, allgemein als Mehrwertdienste bezeichnet, ermöglicht wird.

Für die nachfolgende Beschreibung einschließlich der Ansprüche sei grundsätzlich darauf hingewiesen, dass der Begriff "Telekommunikationsendeinrichtung" nachfolgend der Einfachheit halber als Endeinrichtung bezeichnet wird und ohne weitere Spezifizierung im Wesentlichen jede zur Sprach- und/oder Datenübertragung über ein Telekommunikationsnetz geeignete Endeinrichtung umfasst, also insbesondere schnurgebundene und schnurlose Telefone, einem als Festnetz oder Mobilfunknetz ausgebildetem Subnetz des Telekommunikationsnetzes zugeordnete Telefone aber auch Faxgeräte, PDAs (Personal Digital Assistant), MDAs (Multimedia Digital Assistant) einschließlich WRP-(Wireless Exess Protokoll) fähige Endeinrichtungen und Rechner mit entsprechender Netzanschluss-Software.

Ferner umfasst der Begriff "Telekommunikations-Dienstendeinrichtung", nachfolgend der Einfachheit halber als Diensteinrichtung bezeichnet, im Wesentlichen jede Endeinrichtung eines im wesentlichen beliebigen Telekommunikationsnetzes, welche über eine gemeinsam zugeordnete, auf einem jeweiligen Telekommunikationsnetz basierte Service-Rufnummer entsprechend der individuellen Verschaltung anwählbar sind und über welche beispielsweise Ansage- und/oder Infodienste über das Telekommunikationsnetz abrufbar sind oder auch Audio- und/oder Videokonferenzen ermöglicht werden. Weitere Beispiele für derzeit angebotene Dienstleistungen, sind unter anderem Auskunftsdienste, Bestellhotlines, spezielle Beratungen oder telefonische Wetterinformationen.

Einige Diensteinrichtungen, wie z.B. solche von Bestellhotlines, die in TV-Werbesendungen beworben werden oder öfters Sonderaktionen fahren, unterliegen häufig hohen Lastzeitspitzen. Oft ist es hierbei wünschenswert, dass in den Fällen der Lastspitzen tatsächlich nur potentielle Dienstnutzer zu der Diensteinrichtung und gegebenenfalls zu entsprechenden Bestellhotline- bzw. Call-Center-Agenten durchgeschaltet werden, die eine gute Kundenbindung zu dem anbietendem Unternehmen, welches im vorliegenden Beispiel also die Bestellhotline betreibt, haben. Insbesondere säumige Zahler sollten gerade in diesen Lastspitzen ausgeblendet werden, da bei einem Geschäftsabschluss Mehrarbeit für das Unternehmen entsteht. In anrufschwachen Zeiten sollten hingegen auch diese Anrufer durchkommen und bestellen können.

Im intelligenten Netz bestimmter Telekommunikationsnetze oder -subnetze, wie beispielsweise im Netz der Deutschen Telekom AG besteht derzeit bereits die Möglichkeit, in Zusammenarbeit mit sog. Call-Routing-Solution (CRS)-Produkten eine Blacklist zu führen, die jedoch statisch und nicht flexibel auf Lastzeiten ausgelegt ist. Sinn und Zweck einer derartigen Blacklist ist es, Rufnummern bestimmter Nutzer oder auch Dienstanbieter zu speichern, derart, dass der Aufbau von Rufverbindungen von einer derart gespeicherten oder zu einer derart gespeicherten Rufnummer unterbunden wird. Im vorliegenden Fall also z.B., dass eine Rufverbindung zu einer angewählten Diensteinrichtung, die von einer, einem säumigen Zahler eindeutig zuordenbaren Rufnummer ausgeht, zu der entsprechenden Diensteinrichtung nicht vollständig aufgebaut, das heißt durchgeschaltet wird.

Ein weiteres Konzept ist aus DE 103 00 277 A1 bekannt.

Da jedoch, wie vorstehend erwähnt, derartige Blacklisten derzeit lediglich statisch sind und also nicht flexibel auf Lastzeiten ausgelegt sind, ist es derzeit nicht möglich, derartige Blacklisten lediglich in Lastspitzen auf einfache Weise zuzuschalten und somit nur in Lastzeiten eine entsprechende Filterung von rufenden Endeinrichtungen durchzuführen.

Aufgabe der Erfindung ist es, einen technischen Lösungsweg aufzuzeigen, eine Anruferlast in Bezug auf eine bestimmte Diensteinrichtung automatisiert zu erkennen und in Folge eine höchst flexibel zu- und abschaltbare Blacklist-Funktionalität zu bewirken.

Die erfindungsgemäße Lösung ist auf höchst überraschende Weise bereits durch einen Gegenstand mit den Merkmalen eines der unabhängigen Ansprüche gegeben.

Die Erfindung schlägt somit ein Verfahren sowie ein System zum automatisierten Filtern, insbesondere automatisierten netzbasierten Filtern, von rufenden Endeinrichtungen beim Ruf zu einer Diensteinrichtung über ein Telekommunikationsnetzes vor, bei welchem unter Ansprechen auf die Aktivierung einer, der Diensteinrichtung zugeordneten Rufauswertevorrichtung, diese in Bezug auf die Diensteinrichtung ein Rufaufkommen pro vorgegebener/vorgebbarer Zeiteinheit erfasst, unter Ansprechen auf das Erreichen eines vorgegebenen/vorgebbaren Rufaufkommen-Schwellwertes automatisiert eine Identifizierungsprozedur hinsichtlich jeder rufenden Endeinrichtung, basierend auf wenigstens einer in einer durch die Rufauswertevorrichtung zugreifbaren Datenbank gespeicherten, jeweils wenigstens einer Endeinrichtung eindeutig zuordenbaren Identifizierungsinformation eingeleitet und unter Ansprechen auf eine Identifizierung der rufenden Endeinrichtung der gewünschte Ruf der identifizierten Endeinrichtung unterbunden wird.

Das erfindungsgemäße Verfahren und System gewährleistet somit, dass nach Aktivierung der Rufauswertevorrichtung automatisiert ein Anruferverhalten in Bezug auf eine bestimmte Diensteinrichtung erfasst und selbständig auf Lastspitzen im Anruferverhalten angesprochen und derart reagiert wird, dass Rufe von rufenden Endeinrichtungen, die über in einer Datenbank vorab gespeicherten Identifizierungsinformationen, also insbesondere über eine "Blacklist" identifizierbar sind, unterbunden und folglich nicht durchgestellt werden. Diensteinrichtungen und somit beispielsweise Call-Center-Recourcen werden somit auch in Hauptlastzeiten, die nicht vom Dienstanbieter vorhergesehen werden können, weiterhin geschont und bestimmte Endeinrichtungen, also beispielsweise Endeinrichtungen von Nutzern, die als "nicht so gute Kunden" in einer Datenbank gespeichert sind, automatisch während der Hauptlastzeiten herausgefiltert. Entsprechend können erwünschte Endeinrichtungen oder auch unbekannte Endeinrichtungen schneller durchgestellt und also zügiger abgearbeitet werden.

In einer besonders vorteilhaften Weiterbildung schlägt die Erfindung ferner vor, dass eine eingeleitete Identifizierungsprozedur erst wieder unter Ansprechen auf das Verstreichen eines vorgegebenen/vorgebbaren, in Bezug auf die zur Erfassung des Rufaufkommens vorgegebene/vorgebbare Zeiteinheit größeren Zeitintervalls, während welchem dauerhaft ein Rufaufkommen unterhalb des Rufaufkommen-Schwellwertes erfasst wird, deaktiviert wird.

Hierdurch ist folglich sichergestellt, dass sich die intelligente Blacklist im Wesentlichen so wie eine normale Lastspitze im Anruferverhalten verhält, also spontan ansteigend und erst langsam abbauend. Auch wird ein ständiges Umschalten zwischen der durch die Erfindung gewährten Funktion "Anwenden der intelligenten Blacklist" und "Nicht Anwenden der intelligenten Blacklist" vermieden.

In weiterer zweckmäßiger Fortbildung der Erfindung, insbesondere für das flexible Einsetzen des erfindungsgemäßen Gegenstandes, basierend auf spezifischen Diensteinrichtungsanforderungen bzw. - umgebungen ist ferner vorgesehen, dass zum Einrichten und/oder Aktivieren der Raufauswertvorrichtung eine der Diensteinrichtung zugewiesene Lastinformation, umfassend die Zeiteinheit und einen, eine maximale Anzahl von die Diensteinrichtung rufenden Rufen repräsentierenden Rufwert zum Vorgeben des Rufaufkommen-Schwellwertes an die Rufauswertevorrichtung übertragen wird.

Von Vorteil hierbei ist, dass eine solche Lastinformation zum Vorgeben des Rufaufkommen-Schwellwertes im Wesentlichen jeder Zeit übertragen werden kann und somit die erfindungsgemäß zur Verfügung gestellte intelligente Blacklist nicht nur im Vorfeld einer Anwendung, sondern auch bei Einsatz im Wesentlichen ständig adaptierbar und folglich den jeweils vorliegende Umgebungsparametern dynamisch anpassbar ist.

In diesem Sinne sieht die Erfindung ferner vor, dass für das verzögerte Abschalten der durch die Erfindung bereit gestellten Funktionalität einer intelligenten, also im Wesentlichen vom Rufaufkommen abhängigen Blacklist zusätzlich ein Wert für ein Bezug auf die Zeiteinheit größeres Zeitintervall an die Rufauswertevorrichtung übertragen wird und/oder das Zeitintervall durch die Rufauswertevorrichtung in funktionaler Abhängigkeit von der Zeiteinheit berechnet und gesetzt wird, beispielsweise in der Art, dass je größer die Zeiteinheit gewählt wird, die Funktionalität der intelligenten Blacklist über eine ständig errechnete Quersumme aller Rufe in der Zeiteinheit wieder um so verzögerter herausgenommen wird.

Abgesehen von der Führung und Aktualisierung der in der Datenbank gespeicherten Identifizierungsinformation reichen somit je nach Ausführung zwei bzw. drei vom Dienstanbieter, also vom Dienstkunden des erfindungsgemäßen Gegenstandes, zu übermittelnde Parameter aus, um eine Lastzeit dynamisch flexibel zu erfassen und die erfindungsgemäße Funktionalität der intelligenten Blacklist verzögert wieder herauszunehmen.

Erfindungsgemäß ist hierfür in praktischer Ausführung insbesondere vorgesehen, dass unter Ansprechen auf die Aktivierung der Rufauswertevorrichtung der Zeitablauf einer jeweiligen Zeiteinheit überwacht wird, insbesondere unter Steuerung einer Logik, wobei unter Ansprechen auf jeden Ruf zu der Diensteinrichtung über das Telekommunikationsnetz ein Rufzähler um jeweils Eins hochgesetzt und zumindest nach Ablauf einer jeweiligen Zeiteinheit mit dem Rufwert verglichen wird, wobei unter Ansprechen auf eine Übereinstimmung oder Überschreitung des Rufzählers in Bezug auf den Rufwert ein Signal zum Einleiten der Identifizierungsprozedur ausgegeben wird und unter Ansprechen auf den Zeitablauf einer jeweiligen Zeiteinheit der Rufzähler wieder auf Null gesetzt werden.

In Weiterbildung ist hinsichtlich des verzögerten Herausnehmens der erfindungsgemäßen Funktionalität der "intelligenten Blacklist" ferner in bevorzugter Ausführungsform vorgesehen, dass unter Ansprechen auf das Einleiten der Identifizierungsprozedur mittels eines (Zeit)-Zählers der Zeitverlauf eines jeweiligen Zeitintervalls überwacht wird und eine eingeleitete Identifizierungsprozedur erst wieder unter Ansprechen auf das Verstreichen eines Zeitintervalls, während welchem dauerhaft ein Rufaufkommen unterhalb des Rufaufkommen-Schwellwertes erfasst wird, deaktiviert wird.

Entsprechend ist in bevorzugter Ergänzung ferner vorgesehen, dass der (Zeit)-Zähler unter Ansprechen auf eine Übereinstimmung oder Überschreitung des Rufzählers in Bezug auf den Rufwert auf Null gesetzt wird und also der Verzögerungsmechanismus unter Ansprechen auf das Erreichen eines gesetzten Rufaufkommen-Schwellwertes stets von neuem eingeleitet wird, bis ein Zeitintervall vollständig ohne ein dem Rufaufkommen-Schwellwert entsprechendes oder überschreitendes Rufaufkommen verstrichen ist.

Die Erfindung sieht ferner in bevorzugter Weiterbildung vor, dass zur Durchführung der Identifizierungsprozedur eine beim Ruf einer jeweiligen rufenden Endeinrichtung über das wenigstens eine Telekommunikationsnetz übermittelte Identifizierungsinformation an die Rufauswertevorrichtung übergeben und die übergebende Identifizierungsinformation mit der wenigstens einen gespeicherten Identifizierungsinformation verglichen wird.

Folglich ist die Erfindung auf einfache Weise implementierbar, da bereits heutzutage entsprechende Leistungsmerkmale in Telekommunikationsnetzen vorgesehen sind, die Verbindungsdaten von ankommenden Rufen festzustellen. Häufig wird die übermittelte Rufnummer oder Adresse der rufen Endeinrichtung durch das Telekommunikationsnetz überprüft und somit sichergestellt, dass immer die tatsächliche Rufnummer oder Adresse der rufen Endeinrichtung zum Angerufenen übertragen wird. Auch die entsprechende Übergabe von Rufnummern von analogen Anschlüssen ist hierbei möglich, da diese im Telekommunikationsnetz ebenfalls übermittelt werden.

Für die Anwendung der Erfindung können jedoch als Identifizierungsinformation je nach rufender Endeinrichtung nicht nur derartige Rufleitungsinformationen (Calling-Line-Identification) eingesetzt werden, sondern auch in entsprechender Weise beispielsweise IP-Adressen und/oder HLR (Heimat-Register, Homelocation-Register) -basierte Informationen eingesetzt werden, so dass allgemein ein Abgleich von im Wesentlichen jeder Adresse eines rufenden Teilnehmers (CgpA-Calling-Party-Adress) mit in der Datenbank speicherbarer Identifizierungsinformation durchführbar ist. Die Erfindung gewährleistet somit die Verwendung für im Wesentlichen jede Art von rufenden Endeinrichtungen.

Grundsätzlich kann die Rufauswertevorrichtung unmittelbar der Diensteinrichtung zugeordnet sein oder von dieser umfasst sein. In besonders bevorzugter Ausführung ist jedoch vorgesehen, dass die Rufauswertevorrichtung einer zur Diensteinrichtung geschalteten Rufnummer des Telekommunikationsnetzes, insbesondere Servicerufnummer des Telekommunikationsnetzes, zugeordnet wird und somit in zweckmäßiger Weise zur Bereitstellung der Rufauswertevorrichtung wenigstens teilweise ein intelligentes Netz des Telekommunikationsnetzes verwendbar ist, so dass das erfindungsgemäß automatisierte Filtern vorzugsweise im Wesentlichen netzbasiert durchgeführt wird.

Hierzu ist beispielsweise zur praktischen Umsetzung vorgesehen, dass unter Ansprechen auf die Aktivierung der Rufauswertevorrichtung ein sog. Trigger-Detection-Point (TDP) für die Rufnummer der Diensteinrichtung gesetzt und unter Ansprechen auf die Deaktivierung der Rufauswertevorrichtung ein solcher gesetzter TDP wieder gelöscht wird.

Unter Ansprechen auf den gesetzten TDP, beispielsweise durch eine Vermittlungseinheit des Telekommunikationsnetzes in Folge eines bei der Vermittlungseinheit ankommenden Rufs zu der Diensteinrichtung, wird ein Ruf-Indikationssignal an die Rufauswertevorrichtung übertragen und die Weiterbehandlung des Rufes wird bis zum Erhalt eines Rufbehandlungssignals der Rufauswertevorrichtung ausgesetzt. Ein solches Ruf-Indikationssignal umfasst somit in vorstehend bevorzugter Ausführungsform ferner eine der rufenden Endeinrichtung eindeutig zuordenbare Identifizierungsinformation.

Entsprechend wird von der Rufauswertevorrichtung unter Ansprechen auf eine jeweils durchgeführte Identifizierungsprozedur ein entsprechendes Rufbehandlungssignal zum Unterbinden oder Weiterleiten des Rufs der entsprechenden Endeinrichtung an die Vermittlungseinheit rückübermittelt.

Die Erfindung sieht ferner in bevorzugter Weiterbildung vor, dass zum Unterbinden des Rufs einer durch die Rufauswertevorrichtung identifizierten Endeinrichtung dieser Ruf mit oder ohne Anzeige an der rufenden Endeinrichtung abgebrochen wird oder der Ruf zu einer mit der Rufauswertevorrichtung in Verbindung stehenden Warteschlangeneinrichtung umgeleitet wird, aus welcher erst unter Ansprechen auf eine Deaktivierung der Identifizierungsprozedur eingereihte Rufe zu der Diensteinrichtung weitergeleitet werden.

Ferner sieht die Erfing für eine benutzerfreundliche Anwendbarkeit der erfindungsgemäßen Funktionalität durch die entsprechenden Dienstanbieter in zweckmäßiger Weiterbildung ferner vor, dass die Vorgabe und/oder Aktualisierung von Ruflast- und/oder Rufauswerteparametern einschließlich zu speichernder Identifizierungsinformation und/oder zur Aktivierung und Deaktivierung der Rufauswertevorrichtung eine mit dem intelligenten Netz des Telekommunikationsnetzes, für welches die (Service)Rufnummer der Diensteinrichtung zugeordnet ist, in Verbindung stehende Nutzerschnittstelle verwendet wird, die zweckmäßigerweise ferner Zugang zu einem Anwendungsportal für die entsprechende Vorgabe und/oder Aktualisierung, für die Auswahl möglicher Rufunterbindungsroutinen und/oder zur entsprechenden Aktivierung und Deaktivierung der Rufauswertevorrichtung bereitstellt.

Zweckmäßigerweise wirkt in dem erfindungsgemäßen System die Rufauswertevorrichtung mit einer Speichereinheit zum Speichern der Lastinformation, umfassend die Zeiteinheit und einen eine maximale Anzahl von die Diensteinrichtung rufenden Rufen repräsentierenden Rufwert und mit einem Rufzähler derart zusammen, dass durch Aktivierung der Rufauswertevorrichtung die Überwachung eines jeweiligen Zeitverlaufs der Zeiteinheit einschließlich des Vergleichens des Rufzählers mit dem Rufwert derart gewährleistet wird, dass unter Ansprechen auf eine Übereinstimmung oder Überschreitung des Rufzählers mit dem Rufwert die Ausgabe eines Signals zum Einleiten der Identifizierungsprozedur erfolgt, wobei unter Ansprechen auf jeden Ruf zu der Diensteinrichtung das Hochsetzen des Rufzählers um jeweils Eins erfolgt und unter Ansprechen auf den Zeitablauf einer jeweiligen Zeiteinheit ein Rücksetzen des Rufzählers auf Null erfolgt.

In besonders bevorzugter Ausbildung umfasst das erfindungsgemäße System ferner eine, mit der Rufauswertevorrichtung zusammenwirkende Einheit zum Vorgeben und/oder zum Berechnen eines in Bezug auf die Zeiteinheit größeren Zeitintervalls sowie einen (Zeit)-Zähler zur Überwachung des Zeitintervalls und zum Deaktivieren einer eingeleiteten Identifizierungsprozedur unter Ansprechen auf das Verstreichen eines Zeitintervalls, während welchem dauerhaft ein Rufaufkommen unterhalb des Rufaufkommen-Schwellwertes erfasst wird. Die Speichereinheit, der Rufzähler und die Zeitzähler können hierbei Teil der Rufauswertevorrichtung sein oder aber über entsprechende Kommunikationsverbindungen mit der Rufauswertevorrichtung in Verbindung stehen. Auch kann die Rufauswertevorrichtung eine integrierte Logik umfassen und/oder mit einer an anderer Stelle angeordneten Logik zusammenwirken. Unter Ansprechen auf eine Übereinstimmung des Rufzählwertes mit dem Rufwert wird der (Zeit)Zähler auf Null zurückgesetzt.

Die Rufauswertevorrichtung aber auch weitere vorstehend aufgezeigte Einrichtungen, mit denen die Rufauswertevorrichtung zusammenwirkt oder die in der Rufauswertevorrichtung integriert sind, sind zur netzbasierten Umsetzung wenigstens teilweise durch Einheiten eines intelligenten Netzes bereit gestellt und/oder sind über Schnittstelleneinheiten, welche mit einem intelligenten Netz zusammenwirken, miteinander verbindbar.

Ein netzbasiertes System umfasst vorzugsweise eine mit einem intelligenten Netz unmittelbar oder mittelbar in Verbindung stehende Nutzerschnittstelle, über welche zweckmäßigerweise auf ein Anwendungsportal zugreifbar ist. Ein netzbasiertes System umfasst ferner in bevorzugter Weise eine mit dem Anwendungsportal zusammenwirkende Steuerungs- oder Logikeinheit zum Bewirken einer Anpassung, Speicherung und/oder Umsetzung von eingegebener Diensteinrichtungs-spezifischer Ruflast- und/oder Rufauswerteinformationen.

Die Erfindung stellt folglich ein intelligentes Netz bereit, welches wenigstens teilweise zur Bereitstellung einer oder zum Zusammenwirken mit einer Rufauswertevorrichtung zum Bereitstellen eines Systems zum Durchführen eines Verfahrens zum automatisierten Filtern von rufenden Endeinrichtungen beim Ruf zu einer Diensteinrichtung über ein Telekommunikationsnetz bereit.

Weitere Vorteile und Merkmale der Erfindung ergeben sich aus der nachfolgenden detaillierten Beschreibung einiger bevorzugter Ausführungsbeispiele unter Bezugnahme auf die beigefügten Zeichnungen.

In den Zeichnungen zeigen:
- Fig. 1: ein Flussdiagramm, in dem ein bevorzugter Ablauf einer durch einen Dienstanbieter und folglich Nutzer der Erfindung über eine Nutzerschnittstelle bewirkten Initialisierung bzw. Aktivierung der Bereitstellung einer automatischen Ruffilterung mit für die Erfindung wesentlichen Schritten dargestellt ist,
- Fig. 2: eine schematische Ablauf-Prinzipskizze betreffend Wirkzusammenhänge einzelner, bei der Durchführung des erfindungsgemäßen Verfahrens beteiligter und/oder betroffener Einheiten zur Ruflastaufkommen abhängigen Rufverarbeitung,
- Fig. 3: ein Diagramm, welches in Abhängigkeit eines erfassten Rufaufkommens pro Zeiteinheit das Ein- und Ausschalten der erfindungsgemäßen Funktionalität einer intelligenten Blacklist darstellt,
- Fig. 4: ein stark vereinfachtes Blockschaltbild betreffend eine beispielhafte Anbindung des erfindungsgemäßen Systems ein bestehendes Telekommunikationsnetz, insbesondere hinsichtlich der Initialisierung bzw. Aktivierung einer netzbasierten automatisierten Ruffilterung an, und
- Fig. 5: eine Prinzipskizze betreffend durch eine erfindungsgemäße netzbasierte Rufauswertevorrichtung gewährleisteter Wirkzusammenhänge unter schematischer Darstellung der Anbindung an ein bestehendes Telekommunikationsnetz.

Für die nachfolgende detaillierte, beispielhafte Beschreibung einer netzbasierten automatisierten Ruffilterung sei grundsätzlich angenommen, dass ein Dienstanbieter D_{A} eine Diensteinrichtung E_{A}, beispielsweise in der Art eines Call-Centers betreibt, welcher zur Anwahl von einer im Wesentlichen beliebigen Endeinrichtung E_{N} über ein bestimmtes Telekommunikationsnetz T aus eine auf dem Telekommunikationsnetz T basierte spezifische Servicerufnummer zugeordnet ist. Das Telekommunikationsnetz T kann im Wesentlichen jegliche Arten von Kommunikationsnetzen umfassen und zum Beispiel als Zentralnetz oder als dezentrales Netz, als öffentliches, lokales, nationales oder länderübergreifendes Netz ausgebildet sein und diverse Subnetze umfassen. Durch Anwahl der Telekommunikationsnetz T basierten Servicerufnummer wird der Ruf von der Endeinrichtung E_{N} zum Netzanschluss der zugeordneten Diensteinrichtung E_{A} geleitet. Die Diensteinrichtung E_{A} bzw. der Netzanschluss der Diensteinrichtung E_{A} muss daher nicht innerhalb des Telekommunikationsnetzes T sein, sondern kann einem "nebengeordneten" Telekommunikationsnetz zugeordnet sein.

Die Netzanschlüsse der Endeinrichtungen E_{Nx} und der Diensteinrichtung E_{A} können darüber hinaus Festnetz- oder Mobilnetzanschlüsse sowie kabelgebunden oder kabellos sein. Netzspezifische Identifizierungsinformation, wie Rufnummer, IP-Adresse oder andere Adresstypen, sind den jeweiligen Telekommunikationseinrichtungen, bei TK-Anlagen zumindest dem Hauptanschluss, eindeutig zugeordnet.

Angenommen sei ferner, dass beim Rufaufbau einer Endeinrichtungen E_{N} durch diese oder durch das jeweilige Netz, über welches der Rufaufbau eingeleitet wird, eine dieser Endeinrichtung E_{N} eindeutig zugeordnete Identifizierungsinformation, beispielsweise bereits aus Gründen der Tarifierung und/oder als notwendiger Datenbestandteil zum Verbindungsaufbau mit übermittelt wird.

Es sei ferner darauf hingewiesen, dass auch mehrere Endeinrichtungen E_{Ax} zu einer Diensteinrichtung E_{A} zusammengefasst sein können, und das Leiten des Rufes entsprechend eines mit der Servicerufnummer verknüpften komplexen Leitungsschemas, z.B. in Abhängigkeit der Zeit des Rufes oder des Standorts einer rufenden Endeinrichtung E_{N} zu einem bestimmten Netzanschluss einer von der Diensteinrichtung E_{A} umfassten Endeinrichtung E_{Ax} bewirkt wird. Auch kann ein solches Leitungsschema eine Rangfolge einzelner Endeinrichtungen E_{Ax} berücksichtigen, z.B. im Falle einer Besetztheit oder Nichterreichbarkeit.

Zur besseren Verständlichkeit jedoch, nimmt die nachfolgende Beschreibung eines erfindungsgemäßen, netzbasierten automatischen Filterns von Rufen von Endeinrichtungen E_{Nx} aus dem Telekommunikationsnetz T zu einem "Servicerufnummer-Anschluss" basierend auf einem jeweiligen Ruf-Lastaufkommen lediglich auf eine Diensteinrichtung E_{A} Bezug.

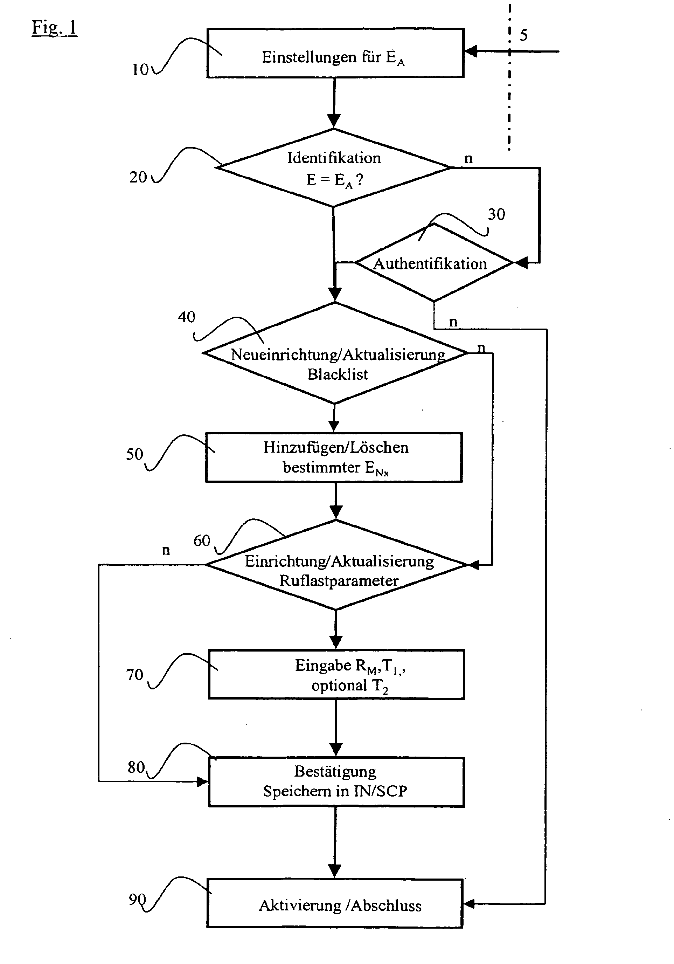

Es wird zunächst auf Fig. 1 Bezug genommen, wobei davon ausgegangen wird, dass ein Dienstanbieter D_{A} bereits eine Servicerufnummer für seine Diensteinrichtung E_{A} besitzt und diesbezüglich die Funktionalität einer Ruflastaufkommen abhängigen Filterung von Rufen ausgewählter Endeinrichtungen E_{Nx} zu seinem "Servicerufnummer-Anschluss" einrichten bzw. aktualisieren möchte.

Der Dienstanbieter D_{A} wählt sich (Fig. 1, Bezugszeichen 5) mit einer Endeinrichtung mittels einer entsprechenden Rufnummer über eine Nutzerschnittstelle in ein bereitgestelltes Portal ein und gibt dort den Wunsch, für seine Diensteinrichtung E_{A} die entsprechenden Einstellungen einzurichten bzw. zu aktualisieren an (Fig. 1, Bezugszeichen 10).

Bei Einwahl in das Portal oder ggf. auch erst zu einem späterem Zeitpunkt, spätestens jedoch bei Bestätigung der gewünschten Leistung, erfolgt eine Identifizierung 20 der Endeinrichtung, z.B. über die CLI, welche bei Rufaufbau mit übertragen wird, als Diensteinrichtung E_{A}. Insbesondere, wenn die Endeinrichtung nicht der Diensteinrichtung E_{A} entspricht oder als zusätzliche Schutzmaßnahme für den Dienstanbieter D_{A} kann mittels einer spezifischen Authentifizierungsroutine 30 die Berechtigung geprüft werden.

Bei erfolgter Identifikation oder Authentifizierung bietet das Portal dem Dienstanbieter D_{A} je nach verwendeter Nutzerschnittstelle ein applikationsspezifisches Auswahlmenü bereit, beispielsweise mittels eines sprachgesteuerten Computers.

Soll eine Blacklist neu eingerichtet oder eine bestehende aktualisiert werden (Fig. 1, Bezugszeichen 40), können vom Dienstanbieter D_{A} ihm bekannte Endeinrichtungen E_{Nx} bestimmter, z.B. säumiger, Kunden, ausgewählt, z.B. durch Tasten- oder Spracheingabe der Rufnummern der Endeinrichtungen E_{NX}, und durch Definition dieser Endeinrichtungen E_{NX} als zu "sperrende" der Blacklist hinzugefügt werden (Fig. 1, Bezugszeichen 50). Entsprechend können durch Definition ausgewählter Endeinrichtungen E_{N} von z.B. wieder zahlungswilligen Kunden als zu "löschende" Endeinrichtungen E_{N} aus der Blacklist entfernt werden (Fig. 1, Bezugszeichen 50).

Sol die Blacklist in Abhängigkeit eines bestimmten Ruflastaufkommens der Diensteinrichtung E_{A} zu- und abschaltbar sein können ferner hierfür notwendige Ruflastparameter zum Definieren eines entsprechenden Rufaufkommen-Schwellwertes eingerichtet oder aktualisiert werden (Fig. 1, Bezugszeichen 60). Zum Definieren eines Rufaufkommen-Schwellwertes, der einer maximalen Anzahl von Rufen zu der Diensteinrichtung E_{A} innerhalb einer bestimmten Zeitspanne entspricht, werden vom Dienstanbieter D_{A} ein diese maximale Anzahl von Rufen vorgebender Rufwert R_{M} und eine Zeiteinheit T₁ ausgewählt (Fig. 1, Bezugszeichen 70). Optional kann ferner ein Wert zum Vorgeben eines gegenüber der Zeiteinheit T₁ größeren Zeitintervalls T₂ eingegeben werden, wodurch ein verzögertes Abschaltverhalten einer unter Ansprechen auf das Erreichen des Rufaufkommen-Schwellwertes zugeschalteten Blacklist derart definiert wird, dass zunächst für die vollständige Dauer eines solchen Zeitintervalls T₂ dass Rufaufkommen wieder dauerhaft unterhalb des Rufaufkommen-Schwellwertes sein muss.

Durch ein solches verzögertes Abschaltverhalten wird insbesondere dem Umstand Rechnung getragen, dass das Abarbeiten einer einmal aufgestauten Lastspitze üblicherweise längere Zeit in Anspruch nimmt, als das momentane Rufaufkommen wiederspiegelt.

Alternativ, entweder durch entsprechende Eingabe des Dienstanbieters D_{A} oder durch entsprechende Voreinstellung bei der automatisierten Ruflastaufkommen abhängigen Filterung von Rufen ausgewählter Endeinrichtungen E_{NX}, ist ein solches Zeitintervall T₂ jedoch auch in funktionaler Abhängigkeit der Zeiteinheit T₁ berechenbar. Zweckmäßiger Weise ist die durch das Zeitintervall T₂ bewirkte Abschaltverzögerung umso länger, je größer die Zeiteinheit T₁ gewählt wird. Ein zum Vorgeben des Zeitintervalls T₂ eingebbarer Wert kann somit z.B. auch in Art eines Multiplikationsfaktors für die Zeiteinheit T₁ eingebbar sein.

Die Zuordnung(en) der vorbeschriebenen Parameter zum "Servicerufnummer-Anschluss" der Diensteinrichtung E_{A} wird unter Ansprechen auf eine Bestätigung 80 des Dienstanbieters D_{A} über das Portal an das Netz T, auf welchem die Servicerufnummer basiert, übertragen und an einer Stelle im intelligenten Netz des Netzes T gespeichert, beispielsweise in einem dafür vorgesehenen Service-Steuerungspunkt, einem sogenannten SCP (Service Control Point), welcher Teil einer Vermittlungseinheit Netzes T sein kann, und/oder an einer Stelle gespeichert, mit welcher das Telekommunikationsnetz T und/oder das intelligente Netz über entsprechende Schnittstellen zum Bereitstellen spezieller Rufverarbeitungsdienste, sogenannte CPS (Call process service)-Schnittstellenkomponenten zusammenwirkt.

Nach Aktivierung der netzbasierten Ruflastabhängigen Blacklist durch den Dienstanbieters D_{A} erfolgt applikationsspezifisch z.B. die Generierung eines dem "Servicerufnummer-Anschluss" der Diensteinrichtung E_{A} zugeordneten Datensatzes und der Vorgang ist abgeschlossen. Der Dienstanbieters D_{A} verlässt das Portal oder kann gegebenenfalls eine weitere Leistung des Portal in Anspruch nehmen.

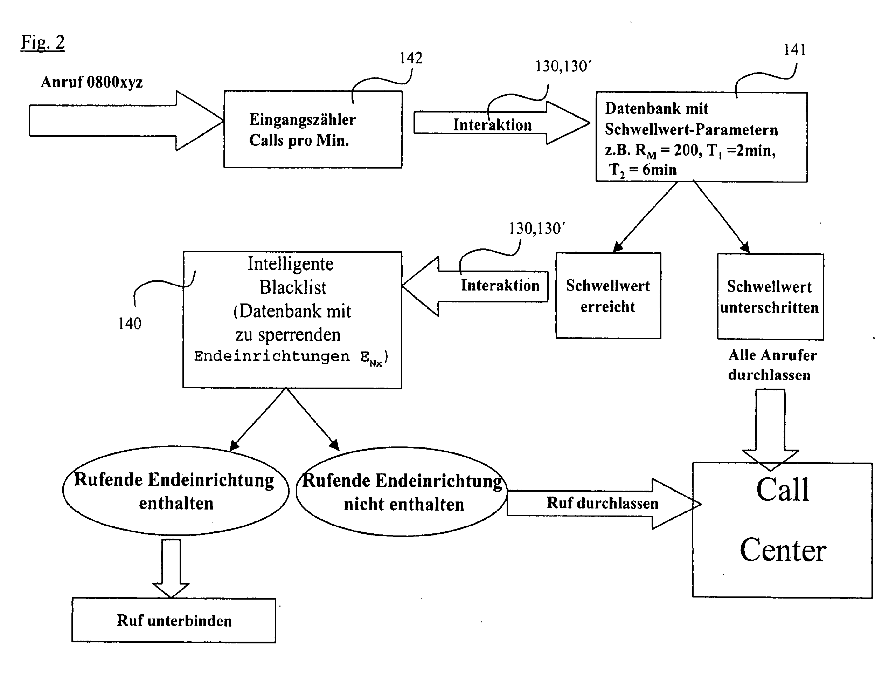

Hat der Dienstanbieters D_{A} über das Portal alle Ruflastparameter eingerichtet und/oder aktualisiert und die im Fall einer Ruflastspitze zu sperrenden Endeinrichtungen Eₙₓ eingegeben hat, wird beispielsweise folgende, anhand Fig. 2 beschriebene erfindungsgemäße automatisierte Ruffilterung bewirkt, wobei Fig. 2 eine schematische Ablauf-Prinzipskizze betreffend Wirkzusammenhänge einzelner, bei der Durchführung des erfindungsgemäßen Verfahrens beteiligter und/oder betroffener Einheiten zur Ruflastaufkommen abhängigen Rufverarbeitung darstellt.

Gemäß Fig. 2 sei angenommen, dass der Dienstanbieters D_{A} eine Diensteinrichtung E_{A} in der Art eines Call-Centers betreibt, welcher zum Anrufen über das Telekommunikationsnetz T die spezifische Servicerufnummer 0800xyz zugeordnet ist

Jeder Anruf der Servicerufnummer 0800xyz wird von einem Eingangszähler 142 erfasst, der gemäß Fig. 2 ausgebildet ist, jeweils die Zahl von Anrufen pro Minute zu zählen, wobei der Eingangszähler 142 einen durch kontinuierliches Aufsummieren der Anrufe resultierenden Rufzählwert jede Minute unter Steuerung einer Logik 130, 130' zum Abgleich mit den in einer Datenbank 141 gespeicherten Rufschwellwert-Parametern übergibt. Beträgt die in der Datenbank 141 gespeicherte Zeiteinheit T₁ 2 min, wird der Eingangszähler 142 nach 2min unter Steuerung der Logik 104 wieder auf Null zurückgesetzt und der vom Eingangszähler 142 zuvor nach Ablauf von 2 Minuten übergebene Rufzählwert wird mit dem gespeicherten, maximalen Rufwert R_{M} pro Zeiteinheit T₁, welches zusammen den individuell vorgegebenen/vorgebbaren Rufaufkommen-Schwellwert definiert, verglichen. Ist der Rufaufkommen-Schwellwert noch nicht erreicht, werden weiterhin alle Anrufe zum Call Center durchgelassen.

Ist der Rufaufkommen-Schwellwert erreicht oder sogar überschritten, wird eine Identifizierungsprozedur für jede rufende Endeinrichtung E_{N} eingeleitet. Hierzu wird unter Steuerung der Logik 130, 130' eine jeweils beim Rufaufbau einer Endeinrichtung E_{N} mit übermittelte Identifizierungsinformation, also im Wesentlichen die jeweilige netzspezifische Adresse der rufenden Endeinrichtung E_{N}, auch CgpA (Calling party Address) genannt, mit den in einer Datenbank 140 gespeicherten Identifizierungsinformationen der Blacklist, welche die zu "sperrenden" bzw. zu filternden Endeinrichtungen Eₙₓ umfasst, abgeglichen.

Ist hierauf basierend die rufende Endeinrichtung E_{N} in der Liste der zu sperrenden Endeinrichtungen Eₙₓ nicht enthalten, wird der Ruf zum Call Center durchgelassen.

Ist jedoch hierauf basierend die rufende Endeinrichtung E_{N} in der Liste der zu sperrenden Endeinrichtungen Eₙₓ enthalten und somit als eine auszufilternde Endeinrichtungen Eₙₓ identifiziert wird der entsprechende Ruf unterbunden.

Applikationsspezifisch kann dies z.B. durch Rückübertragung eines Besetztzeichen an die auszufilternde Endeinrichtungen Eₙₓ erfolgen. Ergänzend oder alternativ kann der Ruf z.B. auch an eine Einrichtung zum automatischen Abspielen einer sprachbasierten Nachricht oder in eine spezielle Warteschlange eingereiht werden, aus welcher Rufe an das Call Center erst wieder nach Abschalten der Blacklist basierten Identifizierungsprozedur durchgeschaltet werden.

Ein Abschalten der Blacklist basierten Identifizierungsprozedur erfolgt gemäß Fig. 2 erst unter Ansprechen auf das vollständige Versteichen eines Zeitintervalls T₂ =6min, innerhalb welchem der Rufaufkommen-Schwellwert kein einziges Mal erreicht ist, also der vom Eingangszähler 142 nach Ablauf von jeweils 2 Minuten übergebene Rufzählwert dreimal hintereinander unterhalb des Rufwertes R_{M} liegt. Dies wird zweckmäßiger Weise durch eine, bei Fig. 2 nicht dargestellte Verzögerungseinrichtung überwacht, die vorzugsweise entweder als Zeitzähler für das Zeitintervall T₂ ausgebildet ist oder als Zähler für die Anzahl von jeweils nach 2 Minuten übergebenen Rufzählwerten, wobei der (Zeit)Zähler jeweils unter Ansprechen auf das Erreichen des Rufaufkommen-Schwellwertes wieder auf Null gesetzt wird.

Beim vorliegenden Beispiel wird ein Abschalten der Blacklist basierten Identifizierungsprozedur somit unter Ansprechen auf einen das Zeitintervall T₂ anzeigenden Zeitzähler bzw. auf einen die Anzahl von drei jeweils nach 2 Minuten übergebenen Rufzählwerten anzeigenden Zähler bewirkt.

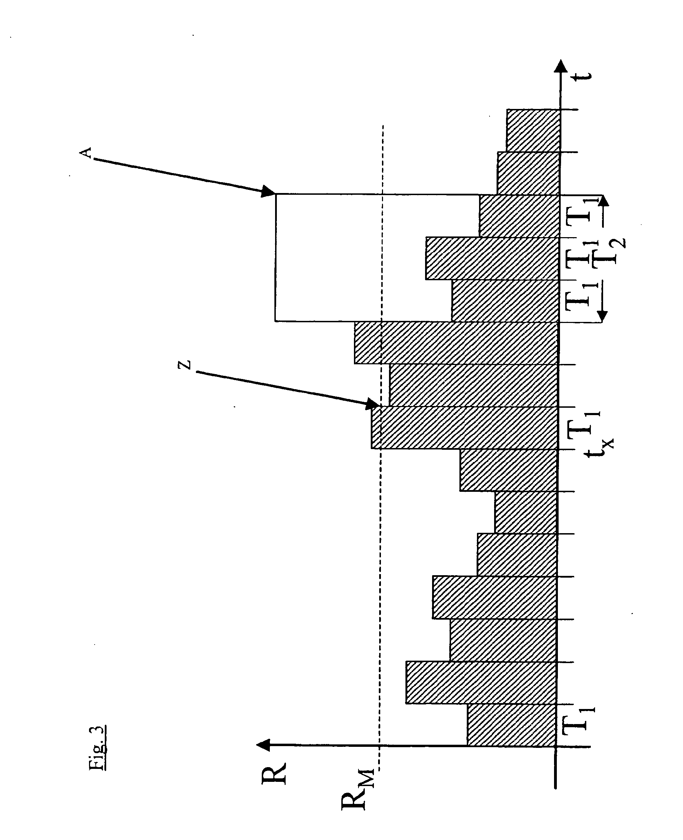

Das Ruflastaufkommen abhängige Zu- und Abschalten der Blacklist mit integrierter Abschaltverzögerung zum automatisierten, Ruflastaufkommen abhängigen Ruffiltern ist bei Fig. 3 in Form eines Diagramms dargestellt, welches in Abhängigkeit eines erfassten Rufaufkommens pro Zeiteinheit einen mit Z gekennzeichneten Zuschaltzeitpunkt und einen mit A gekennzeichneten Abschaltzeitpunkt der intelligenten Blacklist-Funktionalität aufzeigt.

Gemäß Fig. 3 wird bis zu einer Zeit tₓ zu keiner Zeit ein Hochlastaufkommen erreicht. Erst in der darauffolgenden Zeiteinheit T₁ wird der maximalen Rufwert R_{M} erreicht und in Folge unter Ansprechen auf das Erreichen des Rufaufkommen-Schwellwert die intelligente Blacklist-Funktionalität zugeschaltet. Erst innerhalb des mit T₂ gekennzeichneten Zeitfensters ist kein Hochlastaufkommen mehr erfasst worden, so dass unter Ansprechen hierauf die intelligente Blacklist-Funktionalität wieder abgeschaltet wird.

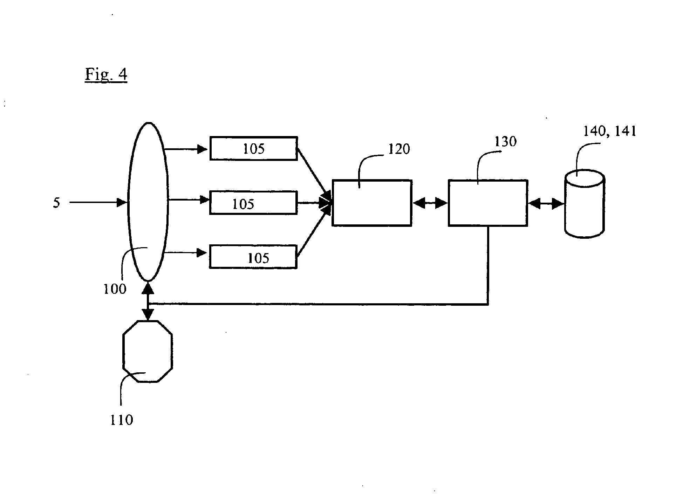

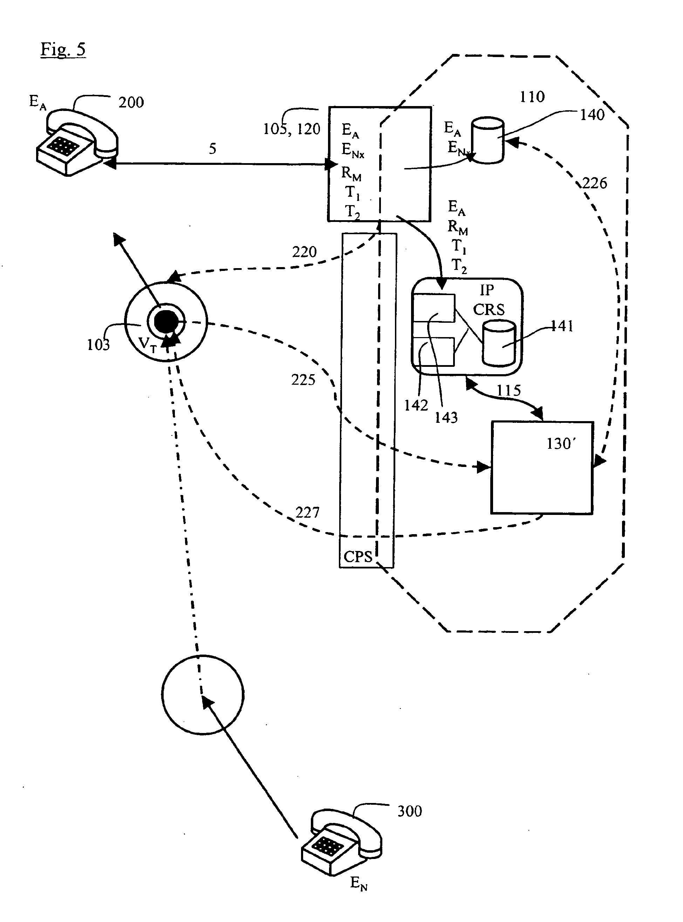

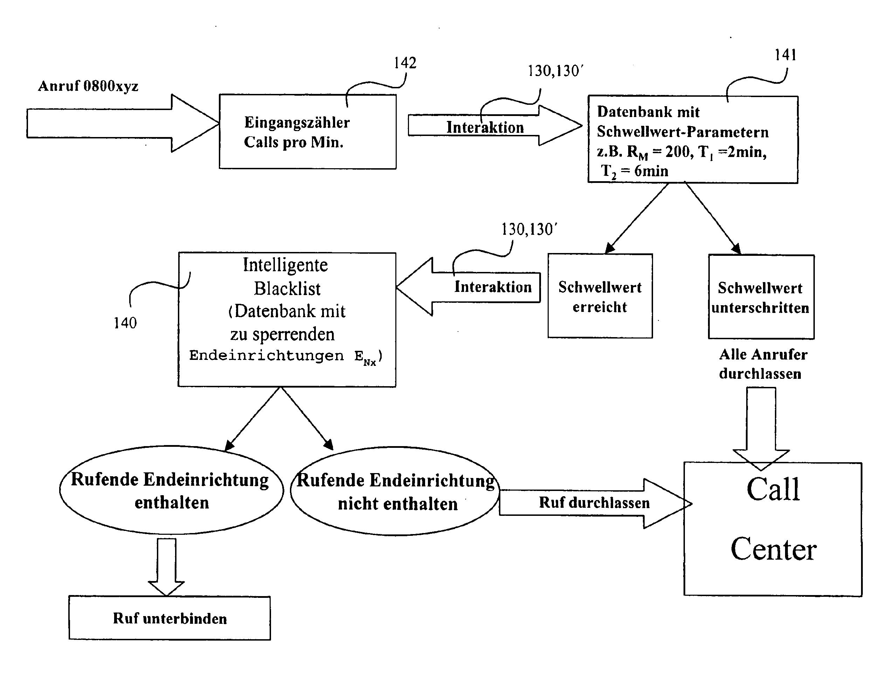

Zur beispielhaften Anbindung an ein bestehendes Telekommunikationsnetz T zeigen Fig. 4 ein stark vereinfachtes Blockschaltbild, insbesondere hinsichtlich der Initialisierung bzw. Aktivierung einer netzbasierten automatisierten Ruffilterung, und Fig. 5 eine Prinzipskizze betreffend durch eine erfindungsgemäße netzbasierte Rufauswerte- oder -filtervorrichtung gewährleisteter Wirkzusammenhänge.

Dargestellt ist ein Telekommunikationsnetz 100, beispielsweise ein Festnetz umfassend, welches jedoch selbstverständlich auch ein Mobilfunknetz oder das Internet umfassen kann. Mit dem Netz 100 stehen verschiedene Typen von Schnittstellen 105 in Verbindung, über welche je nach Typ der Endeinrichtung, über welche ein Dienstanbieter D_{A} die Initialisierung und/oder Aktivierung der intelligenten, Ruflastaufkommen abhängigen Blacklist-Funktionalität für den auf dem Telekommunikationsnetz 100 basierten Servicenummer-Anschluss einer Diensteinrichtung E_{A} vornimmt. Den Schnittstellen 105 wiederum ist ein Portal 120 zugeordnet. Der Dienstanabieter D_{A} erhält somit nach entsprechender Einwahl 5 über das Netz 100 mittels einer der Nutzerschnittstellen 105 Zugang zu dem Portal 120. Ferner ist dem Portal 120 eine zentrale Steuerung 130 zu- oder nachgeordnet, welches zweckmäßigerweise einen bidirektionalen Austausch von Informationen zwischen der zentralen Steuerung 130 und dem Portal 120 ermöglicht und darüber hinaus einen bidirektionalen Austausch zu wenigstens einer Datenbank 140, 141. Ferner ist die zentrale Steuerung 130 direkt oder indirekt mit dem Telekommunikationsnetz 100 und in zweckmäßiger Weise mit einem intelligenten Netz 110 verbunden, um letztendlich das Zusammenwirken aller bei der Durchführung des erfindungsgemäßen Verfahrens beteiligten Einheiten zu ermöglichen. Beispielsweise kann somit über die zentrale Steuerung auch die vorstehend angesprochene Authentifizierungsroutine erfolgen und/oder über das Netz 100 Anfragen an unter- oder nebengeordnete Telekommunikationsnetze bewirkt werden.

Nach Aktivierung einer in Verbindung mit dem Telekommunikationsnetz 100 und/oder dem intelligenten Netz 110 stehenden, eingerichteten Rufauswerte- bzw. - filterungsvorrichtung zum automatisierten Zu- und Abschaltbaren einer Blacklist in Abhängigkeit vom Ruflastaufkommen, kann somit je nach, die Servicenummer rufender Endeinrichtung E_{N} auf jeweilige Identifizierungsinformation zugegriffen werden. Als Identifizierungsinformation dienen somit z.B. eine CLI, eine IP-Adresse, IMEI/IMSI (International Mobile Equipment Identity/International Mobile Subscriber Identity) und/oder eine Information aus einem heimatnetzbezogenen Register, beispielsweise einem HLR im Falle einer GSM-basierten Mobilfunkendeinrichtung.

Gemäß Fig. 5 hat (Fig. 5; Bezugszeichen 5) ein Dienstanbieter D_{A} für eine Telekommunikationsnetz basierte Servicerufnummer zu seiner Diensteinrichtung E_{A}, 200, eine dieser Servicerufnummer zugeordnete, netzbasierte Rufauswerte- bzw. -filterungsvorrichtung zum automatisierten Zu- und Abschaltbaren einer Blacklist in Abhängigkeit vom Ruflastaufkommen über eine mit dem intelligenten Netz 110 direkt oder indirekt in Verbindung stehende Nutzerschnittstelle 105 und gegebenenfalls einem zugeordnetem Portal 120 vollständig, also unter Eingabe der Ruflastparameter R_{M}, T₁ und gegebenenfalls T₂ und der jeweiligen Identifizierungsinformationen bzw. eindeutigen Adressen der im Falle eines Hochlastaufkommens auszufilternden Endeinrichtungen E_{Nx}, eingerichtet und für den entsprechenden Servicerufnummer-Anschluss seiner Diensteinrichtung 200, E_{A} aktiviert.

In folge der Aktivierung werden unter Steuerung einer im intelligenten Netz 110 angeordneten Logik 130' die Identifizierungsinformationen der auszufilternden Endeinrichtungen E_{Nx}, zugeordnet zu der Diensteinrichtung E_{A}, in einer ersten Datenbank 140 abgelegt. Entsprechend werden die für die Diensteinrichtung E_{A} vorgegebenen Ruflastparameter R_{M}, T₁, T₂ in einer Datenbank 141, vorzugsweise einer intelligenten Peripherie IP des intelligenten Netz 110, die mit der intelligenten Logik 130' zusammenwirkt, dargestellt durch den Pfeil 115, beispielsweise innerhalb einer sogenannten spezialisierten Rufleitungslösungseinheit CRS (Call Routing Solution) abgelegt.

Die intelligente Peripherie umfasst beim dargestellten Beispiel den Rufeingangszähler 142, der in Folge, wie vorstehend unter Bezugnahme auf Fig. 2 beschrieben, entsprechend dem Ruflastparameter T₁ eingerichtet und aktiviert wird, und somit nach Ablauf jeder Zeiteinheit T₁ einen aufsummierten Rufzählwert zum Abgleich mit dem gespeicherten maximalen Rufwert R_{M} bereitstellt und wieder zu Null gesetzt wird. Ferner umfasst die intelligente Peripherie beim dargestellten Beispiel einen Zeitzähler 143 für das vorgegebene Zeitintervall T₂, der, wie vorstehend unter Bezugnahme auf Fig. 2 beschrieben, unter Ansprechen auf das Erreichen des Rufaufkommen-Schwellwertes stets wieder auf Null gesetzt wird.

Ferner wird durch Aktivierung der Ruffilterungsvorrichtung über das intelligente Netz 110 für die Servicerufnummer zu der Diensteinrichtung E_{A}, also beispielsweise in einer zentralen Vermittlungsstelle V_{T}, 103 des Telekommunikationsnetzes T, über welche alle Rufe der Servicenummer geleitet werden, ein TDP, ein Trigger Detection Point gesetzt, bei Fig. 5 mit dem mit 220 gekennzeichneten gestrichelten Pfeil angezeigt.

Zur Kommunikation zwischen dem intelligenten Netz 110 und dem die Vermittlungsstellen umfassenden Basisnetz sind herkömmlicher Weise spezielle Schnittstellen, z.B. wie bei Fig. 5 dargestellt sogenannte CPS (Call process service) Schnittstellen vorgesehen.
Wird bei einem Rufaufbau ein solcher Detection Point überquert, werden die Trigger-Bedingungen ausgewertet und ggf. Aktionen ausgeführt. Herkömmlicherweise werden zur Ausführung von Trigger-Bedingungen basierten Aktionen in der Vermittlungsstelle Nachrichten an entsprechende Komponenten des intelligenten Netzes verschickt, welche die entsprechende Aktion daraufhin einleiten oder direkt ausführen.

Im vorliegenden Fall soll somit der Servicerufnummer-Ruf einer rufenden Endeinrichtung E_{N}, 300 im Falle eines Hochlastaufkommens an der Diensteinrichtung E_{A}, 200 in Abhängigkeit der Blacklist durchgelassen oder unterbunden werden.

Wird von der Endeinrichtung E_{N}, 300 über die entsprechende Servicerufnummer ein Ruf zu der Diensteinrichtung 200, E_{A} aufgebaut, so wird der Rufaufbau bis hin zu der Vermittlungsstelle V_{T}, 103 eingeleitet. Die Vermittlungsstelle V_{T}, 103 spricht auf den Trigger Detection Point an und übermittelt eine Anfrage an die Logikeinheit 130' des intelligente Netzes 110, bei Fig. 3 mit dem mit 225 gekennzeichneten gestrichelten Pfeil angezeigt, ob eine bestimmte Aktion, also im vorliegenden Fall der Ruf der rufenden Endeinrichtung E_{N}, 300 an die Diensteinrichtung E_{A}, 200 durchgeschaltet oder unterbunden werden soll.

Die Logik 130' zeigt der intelligenten Peripherie daraufhin über die Kommunikationsverbindung 115 zunächst den Eingang eines Rufes an, wodurch zum Einen das Hochsetzen des Zählers des Rufeingangszählers 142 um Eins und Andererseits das Vergleichen des aktuell nach Ablauf einer Zeiteinheit T₁ aufsummierten und bereitgestellten Rufzählwertes mit dem gespeicherten maximalen Rufwert R_{M} bewirkt wird. Ferner wird der Zähler des Zeitzählers 143 mit dem Zeitintervall T₂ verglichen. Die jeweiligen Vergleichsergebnisse werden an die Logik 130' übergeben. Es sei jedoch darauf hingewiesen, dass die Logik 130' auch Teil der bei Fig. 5 dargestellten intelligenten Peripherie sein kann.

Sind sowohl der Rufzählwert kleiner als der Rufwert R_{M} als auch der Zähler des Zeitzählers 143 gleich oder größer als das Zeitintervall T₂ ist folglich ein Hochlastaufkommen über das Zeitintervall T₂ nicht erfasst worden, so dass auf die Blacklist nicht zugegriffen werden muss.

Sind jedoch der Rufzählwert gleich oder größer als der Rufwert R_{M} oder der Zähler des Zeitzählers 143 kleiner als das Zeitintervall T₂ wird von der Logik 130' auf die in der Datenbank 140 gespeicherte Blacklist zugegriffen, wie durch den Pfeil 226 angezeigt, um die rufende Endeinrichtung E_{N}, 300 basierend auf den gespeicherten Identifizierungsinformationen auszufilternder Endeinrichtungen E_{Nx} als eine solche zu identifizieren.

Identifiziert die Logik 130' die rufende Endeinrichtung E_{N}, 300 nicht als eine der auszufilternden Endeinrichtungen E_{Nx} weist die Logik 130' in einem nächsten Schritt, bei Fig. 5 der gestrichelte Pfeil 227, die Vermittlungsstelle V_{T}, 103 an, den Ruf der Endeinrichtung E_{N}, 300 zur Diensteinrichtung E_{A}, 200 durchzuschalten.

Identifiziert die Logik 130' die rufende Endeinrichtung E_{N}, 300 jedoch als eine der auszufilternden Endeinrichtungen E_{Nx} weist Logik 130' in dem, mit dem gestrichelten Pfeil 227 gekennzeichneten Schritt die Vermittlungsstelle V_{T}, 103 an, den Ruf der Endeinrichtung E_{N}, 300 zu unterbinden.

Wie vorstehend beschrieben, kann dies applikationsspezifisch z.B. durch Rückübertragung eines Besetztzeichen an die Endeinrichtung E_{N}, 300, durch Abspielen eines entsprechenden Ansagetextes und/oder durch Weiterleiten in eine spezielle Warteschlange erfolgen, aus welcher Rufe an die Diensteinrichtung E_{A}, 200 erst wieder nach Verstreichen eines Zeitintervalls T₂ ohne Hochlastaufkommen durchgeschaltet werden. Insbesondere im letzten Fall greift die Logik 130' zweckmäßigerweise in regelmäßigen Abständen auf die intelligente Peripherie zum entsprechend Abrufen der Vergleichergebnisse zu, auch wenn zwischenzeitlich kein Ruf zu der entsprechenden Servicenummer eingeht. Bei Verstreichen eines Zeitintervalls T₂ ohne Hochlastaufkommen kann die Vermittlungsstelle V_{T}, 103 somit entsprechend zeitnah von der Logik 130' zum Durchschalten angewiesen werden.

## Patentansprüche

1. Verfahren zum automatisierten Filtern von rufenden Endeinrichtungen (E_{N}, 300) beim Ruf zu einer Diensteinrichtung (E_{A}, 200) über ein Telekommunikationsnetz (T, 100), **dadurch gekennzeichnet, dass** unter Ansprechen auf die Aktivierung einer, der Diensteinrichtung (E_{A}, 200) zugeordneten Rufauswertevorrichtung (130, 130', 140, 141, 143) in Bezug auf die Diensteinrichtung ein Rufaufkommen pro vorgegebener/vorgebbarer zeiteinheit (T₁) erfasst wird, unter Ansprechen auf das Erreichen eines vorgegebenen/vorgebbaren Rufaufkommen-Schwellwertes (R_{M}, T₁) automatisiert eine Identifizierungsprozedur hinsichtlich jeder rufenden Endeinrichtung (E_{N}, 300) basierend auf wenigstens einer, in einer durch die Rufauswertevorrichtung zugreifbaren Datenbank (140) gespeicherten, jeweils wenigstens einer Endeinrichtung (E_{NX}) eindeutig zuordenbaren Identifizierungsinformation eingeleitet wird und unter Ansprechen auf die Identifizierung einer rufenden Endeinrichtung (E_{N}, 300) der gewünschte Ruf der identifizierten Endeinrichtung unterbunden wird.

2. Verfahren nach vorstehendem Anspruch, ferner **dadurch gekennzeichnet, dass** die Rufauswertevorrichtung (130, 130', 140, 141, 143) einer für die Diensteinrichtung (E_{A}, 200) geschalteten Servicerufnummer des Telekommunikationsnetzes (T, 100) zugeordnet wird.

3. Verfahren nach einem der vorstehenden Ansprüche, ferner **gekennzeichnet dadurch, dass** zur Bereitstellung der Rufauswertevorrichtung (130, 130', 140, 141, 143) wenigstens teilweise ein intelligentes Netz (110) verwendet wird.

4. Verfahren nach einem der vorstehenden Ansprüche, ferner **dadurch gekennzeichnet, dass** eine eingeleitete Identifizierungsprozedur erst wieder unter Ansprechen auf das Verstreichen eines vorgegebenen/vorgebbaren, in Bezug auf die zeiteinheit (T₁) längeren Zeitintervalls (T₂), während welchem dauerhaft ein Rufaufkommen unterhalb des Rufaufkommen-Schwellwertes erfasst wird, deaktiviert wird.

5. Verfahren nach einem der vorstehenden Ansprüche, ferner **gekennzeichnet dadurch, dass** zur Aktivierung eine der Diensteinrichtung (E_{A}, 200) zugeordnete Lastinformation umfassend die Zeiteinheit (T₁) und einen, eine maximale Anzahl von die Diensteinrichtung rufenden Rufen repräsentierenden Rufwert (R_{M}) zum Vorgeben des Rufaufkommen-Schwellwertes an die Rufauswertevorrichtung (130, 130', 140, 141, 143) übertragen wird.

6. Verfahren nach vorstehendem Anspruch, ferner **dadurch gekennzeichnet, dass** zusätzlich ein in Bezug auf die Zeiteinheit (T₁) größeres Zeitintervall (T₂) an die Rufauswertevarrichtung übertragen wird und/oder das Zeitintervall (T₂) durch die Rufauswertevorrichtung in funktionaler Abhängigkeit von der Zeiteinheit gesetzt wird.

7. Verfahren nach vorstehendem Anspruch, ferner **gekennzeichnet dadurch, dass** unter Ansprechen auf die Aktivierung der Rufauswertevorrichtung ein jeweiliger Zeitablauf der Zeiteinheit (T₁) überwacht wird und unter Ansprechen auf jeden Ruf zu der Diensteinrichtung ein Rufzähler (142) um jeweils eins hochgesetzt wird, der zumindest nach Ablauf der Zeiteinheit (T₁) mit dem Rufwert (R_{M}) verglichen wird, wobei unter Ansprechen auf eine Übereinstimmung des Rufzählers mit dem Rufwert (R_{M}) ein Signal zum Einleiten der Identifizierungsprozedur ausgegeben wird und unter Ansprechen auf einen jeweiligen Zeitablauf der Zeiteinheit (T₁) der Rufzähler (142) wieder auf Null gesetzt wird.

8. Verfahren nach vorstehendem Anspruch, ferner **dadurch gekennzeichnet, dass** unter Ansprechen auf das Einleiten der Identifizierungsprozedur mittels eines Zählers (143) ein jeweiliger Verlauf des Zeitintervalls (T₂) überwacht wird und eine eingeleitete Identifizierungsprozedur erst wieder unter Ansprechen auf das Verstreichen eines Zeitintervalls (T₂), während welchem dauerhaft ein Rufaufkommen unterhalb des Rufaufkommen-Schwellwertes erfasst wird, deaktiviert wird.

9. verfahren nach vorstehendem Anspruch, ferner **dadurch gekennzeichnet, dass** der Zählers (143) unter Ansprechen auf eine Übereinstimmung oder Überschreitung des Rufzählerwertes gegenüber dem Rufwert (R_{M}) auf Null gesetzt wird.

10. Verfahren nach vorstehendem Anspruch, ferner **gekennzeichnet dadurch, dass** zur Durchführung der Identifizierungsprozedur eine beim Ruf einer jeweiligen rufen Endeinrichtung (E_{N}, 300) über das wenigstens eine Telekommunikationsnetz (T, 100) übermittelte Identifizierungsinformation an die Rufauswertevorrichtung (130, 130', 140, 141, 143) übergeben und die übergebene Identifizierungsinformation mit der wenigstens einen gespeicherten Identifizierungsinformation verglichen wird.

11. Verfahren nach einem der vorstehenden Ansprüche, ferner **gekennzeichnet dadurch, dass** als Identifizierungsinformation Rufleitungsinformation bzw. CLIs, IP-Adressen und/oder Heimatregister-basierte bzw. HLR-basierte Information verwendet werden.

12. Verfahren nach vorstehendem Anspruch, ferner **gekennzeichnet dadurch, dass** unter Ansprechen auf die Aktivierung der Rufauswertevorrichtung ein Trigger-Detection-Point bzw. TDP für die Rufnummer der Diensteinrichtung (E_{A}, 200) gesetzt und unter Ansprechung auf die Deaktivierung der Rufauswertevorrichtung der gesetzte TDP wieder gelöscht wird.

13. Verfahren nach vorstehendem Anspruch, ferner **gekennzeichnet dadurch, dass** unter Ansprechen auf den gesetzten Trigger-Detection-Point bzw. TDP von einer Vermittlungseinheit (V_{T}, 103) des Telekommunikationsnetzes (T, 100) in Folge eines bei der Vermittlungseinheit (V_{T}, 103) ankommenden Rufs zu der Diensteinrichtung (E_{A}, 200) ein Ruf-Indikationssignal (225) an die Rufauswertevorrichtung übertragen und die Weiterbehandlung des Rufes bis zum Erhalt eines Rufbehandlungssignal (227) der Rufauswertevorrichtung ausgesetzt wird.

14. Verfahren nach vorstehendem Anspruch, ferner **gekennzeichnet dadurch, dass** das Ruf-Indikationssignal eine Identifizierungsinformation der rufen Endeinrichtung umfasst.

15. Verfahren nach einem der vorstehenden Ansprüche, 13 oder 14, ferner **gekennzeichnet dadurch, dass** von der Rufauswertevorrichtung in Abhängigkeit einer jeweiligen Rufauswertung ein entsprechendes Rufbehandlungssignal (227) an die Vermittlungseinheit (V_{T}, 103) zum Unterbinden oder Weiterleiten des Rufs übermittelt wird.

16. Verfahren nach einem der vorstehenden Ansprüche, ferner **gekennzeichnet**, dass zum Unterbinden des Rufs, dieser mit oder ohne Anzeige an der rufenden Endeinrichtung abgebrochen wird oder der Ruf zu einer mit der Rufauswertevorrichtung in Verbindung stehenden Warteschlangeneinrichtung umgeleitet wird, aus welcher erst unter Ansprechen auf eine Deaktivierung der Identifizierungsprozedur eingereihte Rufe zu der Diensteinrichtung weitergeleitet werden.

17. Verfahren nach einem der vorstehenden Ansprüche, ferner **dadurch gekennzeichnet, dass** für die Vorgabe und/oder Aktualisierung von Auflast- und/oder Rufauswerteparameter einschließlich zu speichernder Identifizierungsinformation und/oder zur Aktivierung und Deaktivierung der Rufauswertevorrichtung wenigstens eine mit einem intelligent Netz (110) des Telekommunikationsnetzes (T, 100) in Verbindung stehende Nutzerschnittstelle (105) bereitgestellt wird.

18. Verfahren nach vorstehendem Anspruch, ferner **dadurch gekennzeichnet, dass** über die Nutzerschnittstelle (105) der zugang zu einem Anwendungsportal (120) für die Vorgabe und/oder Aktualisierung von Ruflast- und/oder Rufauswerteparametern, für die Auswahl möglicher Ruf-Unterbindungsroutinen und/oder zur Aktivierung und Deaktivierung der Rufauswertevorrichtung bereitgestellt wird.

19. System zum automatisierten Filtern von rufenden Endeinrichtungen (E_{N}, 300) beim Ruf zu einer Diensteinrichtung (E_{A}, 200) über ein Telekommunikationsnetz (T, 100), **gekennzeichnet durch** eine Rufauswertevorrichtung (130, 130', 140, 141, 143), welche der Diensteinrichtung (E_{A}, 200) derart zuordenbar ist, dass die Rufauswertevorrichtung nach Aktivierung zum Erfassen von einem Rufaufkommen in Bezug auf die Diensteinrichtung pro vorgegebener/vorgebbarer Zeiteinheit (T₁) zugeordnet ist und unter Ansprechen auf das Erreichen eines vorgegebenen/vorgebbaren Rufaufkommen-Schwellwertes (R_{M}, T₁) unter Zugriff auf eine Datenbank (140), in welcher wenigstens eine, jeweils wenigstens einer Endeinrichtung (E_{NX}) eindeutig zuordenbare Identifizierungsinformation gespeichert ist, zum Bewirken des Durchführens einer Identifizierungsprozedur hinsichtlich jeder rufenden Endeinrichtung (E_{N}, 300) und unter Ansprechen auf die Identifizierung einer rufenden Endeinrichtung (E_{N}, 300) zum Bewirken des Unterbindens des gewünschten Rufes der identifizierten Endeinrichtung.

20. System nach vorstehendem Anspruch, ferner **gekennzeichnet dadurch, dass** die Rufauswertevorrichtung (130, 130', 140, 141, 143) einer für die Diensteinrichtung (E_{A}, 200) geschalteten Servicerufnummer des Telekommunikationsnetzes (T, 100) zugeordnet ist.

21. System nach einem der vorstehenden Ansprüche, ferner **gekennzeichnet dadurch, dass** die Rufauswertevorrichtung mit einer Speichereinheit (141) zum Vorgeben einer Lastinformation umfassend die Zeiteinheit (T₁) und einen, eine maximale Anzahl von die Diensteinrichtung rufenden Rufen repräsentierenden Rufwert (R_{M}) und mit einem Rufzähler (142) derart zusammenwirkt, dass durch Aktivierung der Rufauswertevorrichtung die Überwachung des Verlaufs einer jeweiligen Zeiteinheit (T₁) erfolgt, wobei unter Ansprechen auf jeden Ruf zu der Diensteinrichtung das Hochsetzen des Rufzählers (142) um jeweils eins und zumindest nach Ablauf einer jeweiligen Zeiteinheit (T₁) ein Vergleichen des Rufzählers mit dem Rufwert erfolgt, unter Ansprechen auf eine Übereinstimmung des Rufzählers mit dem Rufwert die Ausgabe eines Signals zum Einleiten der Identifizierungsprozedur erfolgt und unter Ansprechen auf den Zeitablauf einer jeweiligen Zeiteinheit (T₁) ein Rücksetzen des Rufzählers (142) auf Null erfolgt.

22. System nach vorstehendem Anspruch, ferner **dadurch gekennzeichnet, dass** die Rufauswertevorrichtung mit einer Einheit zum Vorgeben und/oder zum Berechnen eines in Bezug auf die Zeiteinheit (T₁) größeren Zeitintervalls (T₂) sowie einem Zähler oder Zeitzähler (143) zur Überwachung des Zeitintervalls (T₂) und zum Deaktivieren einer eingeleiteten Identifizierungsprozedur unter Ansprechen auf das Verstreichen eines Zeitintervalls, während welchem dauerhaft ein Rufaufkommen unterhalb des Rufaufkommen-Schwellwertes erfasst wird, zusammenwirkt.

23. System nach vorstehendem Anspruch, ferner **gekennzeichnet durch** ein Rücksetzen des Zählers oder Zeitzählers (143) unter Ansprechen auf eine Übereinstimmung des Rufzählers (142) mit dem Rufwert (R_{M}) auf Null.

24. System nach vorstehendem Anspruch, welches zur Durchführung der Identifizierungsprozedur eine beim Ruf einer jeweiligen, rufen Endeinrichtung (E_{N}, 300) über das wenigstens eine Telekommunikationsnetz (T, 100) übermittelte Identifizierungsinformation der Rufauswertevorrichtung (130, 130', 142, 143, 140, 141) zum Vergleichen mit der wenigstens einen gespeicherten Identifizierungsinformation übergibt.

25. System nach einem der vorstehenden Ansprüche, ferner **gekennzeichnet dadurch, dass** als Identifizierungsinformation Rufleitungsinformation bzw. CLIs, IP-Adressen und/oder Heimatregister-basierte bzw. HLR-basierte Information verwendbar sind.

26. System nach einem der vorstehenden Ansprüche, ferner **gekennzeichnet dadurch, dass** die Rufauswertevorrichtung wenigstens teilweise durch Einheiten bereitgestellt ist, die Teil eines intelligenten Netzes (110) sind und/oder unter Verwendung von Schnittstelleneinheiten mit einem intelligenten Netz (110) zusammenwirken.

27. System nach vorstehendem Anspruch, ferner **gekennzeichnet dadurch, dass** das Aktivieren der Rufauswertevorrichtung das Setzen eines Trigger-Detection-Point bzw. TDP für die Rufnummer der Diensteinrichtung bewirkt.

28. System nach vorstehendem Anspruch, ferner **gekennzeichnet durch** eine Vermittlungseinheit (Vₜ, 103), welche auf das gesetzte Trigger-Detection-Point bzw. TDP anspricht und unter Zusammenwirkung mit der Rufauswertevorrichtung einen jeweils ausgewerteten Ruf unterbindet oder weiterleitet.

29. System nach einem der vorstehenden Ansprüche, ferner **gekennzeichnet durch** wenigstens eine mit einem intelligenten Netz (110) des Telekommunikationsnetzes (T, 10.0) in Verbindung stehende Nutzerschnittstelle (105) für die Diensteinrichtung.

30. System nach vorstehendem Anspruch, ferner **gekennzeichnet durch** ein über die Nutzschnittstelle (105) zugreifbares Anwendungsportal (120) zur Vorgabe und/oder Aktualisierung von Ruflast- und/oder Rufauswerteparametern einschließlich zu speichernder Identifizierungsinformation, zur Auswahl möglicher Ruf-Unterbindungsroutinen und/oder zur Aktivierung und Deaktivierung der Rufauswertevorrichtung,

31. System nach vorstehendem Anspruch, ferner **gekennzeichnet durch** eine mit dem Portal (120) zusammenwirkende Steuerungs- oder Logikeinheit (130, 130') zum Bewirken einer Anpassung, Speicherung und/oder Umsetzung von über das Portal eingegebener Diensteinrichtungs-spezifischer Ruflast- und/oder Rufauswerteinformation.

32. Intelligentes Netz, welches wenigstens teilweise zur Bereitstellung einer oder zum Zusammenwirken mit einer Rufauswertevorrichtung (130, 130', 140, 141, 143) zum Bereitstellen eines Systems nach einem der vorstehenden Ansprüche 19-31, insbesondere zur Durchführung eines Verfahrens nach einem der vorstehenden Ansprüche 1-18 ausgebildet ist.

## Claims

1. Method for automatic filtering of calling terminals (E_{N}, 300) placing a call to a service device (E_{A}, 200) through a telecommunications network (T, 100), **characterized in that**, in response to the activation of a call analysis apparatus (130, 130', 140, 141, 143) associated with the service device (E_{A}, 200), a call volume per predefined/predefinable time unit (T₁) with respect to the service device is registered, in response to a predefined/predefinable call volume threshold value (R_{M}, T₁) being reached, an identification procedure with regard to each calling terminal (E_{N}, 300) based on at least one item of identification information - that in each case can be unambiguously associated with at least one terminal (E_{Nx}) - stored in a database (140) that can be accessed by the call analysis apparatus is automatically initiated, and in response to the identification of a calling terminal (E_{N}, 300), the desired call of the identified terminal is blocked.

2. Method according to the preceding claim, further **characterized in that** the call analysis apparatus (130, 130', 140, 141, 143) is associated with a service call number of the telecommunications network (T, 100) connected for the service device (E_{A}, 200).

3. Method according to any one of the preceding claims, further **characterized in that** an intelligent network (110) is used, at least in part, to provide the call analysis apparatus (130, 130', 140, 141, 143).

4. Method according to any one of the preceding claims, further **characterized in that** an initiated identification procedure is only deactivated again in response to a predefined/predefinable time interval (T₂) having elapsed, which is fairly long with respect to the time unit (T₁), during which time interval a call volume below the call volume threshold value is continuously registered.

5. Method according to any one of the preceding claims, further **characterized in that**, for activation, load information associated with the service device (E_{A}, 200), comprising the time unit (T₁) and a call value (R_{M}) representing a maximum number of calls calling the service device, is transmitted to the call analysis apparatus (130, 130', 140, 141, 143) to predefine the call volume threshold value.

6. Method according to the preceding claim, further **characterized in that**, in addition, a longer time interval (T₂) with respect to the time unit (T₁) is transmitted to the call analysis apparatus and/or the time interval (T₂) is set by the call analysis apparatus in functional dependence on the time unit.

7. Method according to the preceding claim, further **characterized in that**, in response to the activation of the call analysis apparatus, a particular passage of time of the time unit (T₁) is monitored, and in response to each call to the service device a call counter (142) is incremented by one each time, which counter is compared with the call value (R_{M}) at least after the expiration of the time unit (T₁), wherein, in response to an agreement of the call counter with the call value (R_{M}), a signal to initiate the identification procedure is emitted and, in response to a particular passage of time of the time unit (T₁), the call counter (142) is reset to zero.

8. Method according to the preceding claim, further **characterized in that**, in response to the initiation of the identification procedure by means of a counter (143), a particular course of the time interval (T₂) is monitored and an initiated identification procedure is only deactivated again in response to the elapsing of a time interval (T₂), during which time interval a call volume below the call volume threshold value is continuously registered.

9. Method according to the preceding claim, further **characterized in that** the counter (143) is set to zero in response to the call counter value agreeing with or exceeding the call value (R_{M}).

10. Method according to the preceding claim, further **characterized in that**, in order to carry out the identification procedure, an item of identification information transmitted over the at least one telecommunications network (T, 100) at the call of a particular calling terminal (E_{N}, 300) is delivered to the call analysis apparatus (130, 130', 140, 141, 143) and the delivered item of identification information is compared to the at least one stored item of identification information.

11. Method according to any one of the preceding claims, further **characterized in that** calling line identification or CLIs, IP addresses, and/or home location register-based or HLR-based information is used as the identification information.

12. Method according to the preceding claim, further **characterized in that**, in response to the activation of the call analysis apparatus, a trigger detection point or TDP is set for the call number of the service device (EA, 200), and in response to the deactivation of the call analysis apparatus, the set TDP is deleted again.

13. Method according to the preceding claim, further **characterized in that**, in response to the set trigger detection point or TDP, a call indication signal (225) is transmitted from a switching unit (V_{T}, 103) of the telecommunications network (T, 100) to the call analysis apparatus subsequent to a call to the service device (E_{A}, 200) arriving at the switching unit (V_{T}, 103), and further processing of the call is stopped until receipt of a call control signal (227) from the call analysis apparatus.

14. Method according to the preceding claim, further **characterized in that** the call indication signal includes identification information for the calling terminal.

15. Method according to any one of the preceding claims 13 or 14, further **characterized in that**, as a function of a particular call analysis, a corresponding call control signal (227) is transmitted by the call analysis apparatus to the switching unit (V_{T}, 103) to block or forward the call.

16. Method according to any one of the preceding claims, further **characterized in that**, in order to block the call, the call is terminated with or without indication to the calling terminal or the call is redirected to a queuing device standing in connection with the call analysis apparatus, whence queued calls are only forwarded to the service device in response to a deactivation of the identification procedure.

17. Method according to any one of the preceding claims, further **characterized in that** at least one user interface (105) standing in connection with an intelligent network (110) of the telecommunications network (T, 100) is provided for predefining and/or updating call load parameters and/or call analysis parameters including identification information to be stored and/or for activation and deactivation of the call analysis apparatus.

18. Method according to the preceding claim, further **characterized in that** access to an application portal (120) for predefining and/or updating call load parameters and/or call analysis parameters, for selecting possible call blocking routines, and/or for activating and deactivating the call analysis apparatus is provided through the user interface (105).

19. System for automatic filtering of calling terminals (E_{N}, 300) placing a call to a service device (E_{A}, 200) through a telecommunications network (T, 100), **characterized by** a call analysis apparatus (130, 130', 140, 141, 143) that can be associated with the service device (E_{A}, 200) in such a manner that the call analysis apparatus, after activation, is assigned to register a call volume with respect to the service device per predefined/predefinable time unit (T₁), and, in response to a predefined/predefinable call volume threshold value (R_{M}, T₁) being reached, while accessing a database (140) in which is stored at least one item of identification information that in each case can be unambiguously associated with at least one terminal (E_{Nx}), to bring about the performance of an identification procedure with regard to each calling terminal (E_{N}, 300), and in response to the identification of a calling terminal (E_{N}, 300) to accomplish blocking of the desired call of the identified terminal.

20. System according to the preceding claim, further **characterized in that** the call analysis apparatus (130, 130', 140, 141, 143) is associated with a service call number of the telecommunications network (T, 100) connected for the service device (E_{A}, 200).

21. System according to any one of the preceding claims, further **characterized in that** the call analysis apparatus works together with a memory unit (141) for predefining load information comprising the time unit (T₁) and a call value (R_{M}) representing a maximum number of calls calling the service device, and with a call counter (142), in such a manner that the monitoring of the passage of a particular time unit (T₁) takes place through activation of the call analysis apparatus, wherein, in response to each call to the service device the incrementing of the call counter (142) by one each time takes place and at least after the expiration of a particular time unit (T₁) a comparison of the call counter with the call value takes place, in response to an agreement of the call counter with the call value, the emission of a signal to initiate the identification procedure takes place, and in response to the expiration of a particular time unit (T₁), a resetting of the call counter (142) to zero takes place.

22. System according to the preceding claim, further **characterized in that** the call analysis apparatus works together with a unit for defining and/or for calculating a longer time interval (T₂) with respect to the time unit (T₁), and with a counter or time counter (143) for monitoring the time interval (T₂) and for deactivating an initiated identification procedure in response to the passage of a time interval, during which time interval a call volume below the call volume threshold value is continuously registered.

23. System according to the preceding claim, further **characterized by** a resetting of the counter or time counter (143) to zero in response to the call counter (142) agreeing with the call value (R_{M}).

24. System according to the preceding claim, which, in order to carry out the identification procedure, delivers to the call analysis apparatus (130, 130', 140, 141, 143) an item of identification information transmitted over the at least one telecommunications network (T, 100) at the call of a particular calling terminal (E_{N}, 300) for comparison with the at least one stored item of identification information.

25. System according to any one of the preceding claims, further **characterized in that** calling line identification or CLIs, IP addresses, and/or home location register-based or HLR-based information can be used as the identification information.

26. System according to any one of the preceding claims, further **characterized in that** the call analysis apparatus is provided, at least in part, by units that are part of an intelligent network (110) and/or work together with an intelligent network (110) through the use of interface units.

27. System according to the preceding claim, further **characterized in that** the activation of the call analysis apparatus brings about the setting of a trigger detection point or TDP for the call number of the service device.

28. System according to the preceding claim, further **characterized by** a switching unit (V_{T}, 103), which responds to the set trigger detection point or TDP, and, working together with the call analysis apparatus, blocks or forwards a particular, analyzed call.

29. System according to any one of the preceding claims, further **characterized by** at least one user interface (105) for the service device standing in connection with an intelligent network (110) of the telecommunications network (T, 100).

30. System according to the preceding claim, further **characterized by** an application portal (120) - that can be accessed through the user interface (105) - for predefining and/or updating call load parameters and/or call analysis parameters including identification information to be stored for selection of possible call blocking routines and/or for activation and deactivation of the call analysis apparatus.

31. System according to the preceding claim, further **characterized by** a control or logic unit (130, 130') working together with the portal (120) to bring about an adjustment, storage and/or conversion of service-device-specific call load information and/or call analysis information that is input through the portal.

32. Intelligent network, which is designed, at least in part, to provide or to work together with a call analysis apparatus (130, 130', 140, 141, 143) in order to provide a system according to any one of the preceding claims 19 - 31, in particular for carrying out a method according to any one of the preceding claims 1-18.

## Revendications

1. Procédé de filtrage automatisé de terminaux appelants (E_{N}, 300) lors d'un appel vers un dispositif de service (E_{A}, 200) par l'intermédiaire d'un réseau de télécommunication (T, 100), **caractérisé en ce que**, en réponse à l'activation d'un dispositif d'analyse d'appel (130, 130', 140, 141, 143) associé au dispositif de service (E_{A}, 200), un volume d'appels par rapport au dispositif de service est détecté par unité de temps prédéterminée/prédéterminable (T₁), et en réponse à l'atteinte d'une valeur de seuil de volume d'appels prédéterminée/prédéterminable (R_{M}, T₁), une procédure d'identification pour chaque terminal appelant (E_{N}, 300), basée sur au moins une information d'identification stockée dans une base de donnée (140) accessible par le dispositif d'analyse d'appel et attribuable de manière univoque à au moins un terminal (E_{Nx}), est déclenchée de manière automatisée et **en ce que**, en réponse à l'identification d'un terminal appelant (E_{N}, 300), l'appel souhaité du terminal identifié est empêché.

2. Procédé selon la revendication précédente, également **caractérisé en ce que** le dispositif d'analyse d'appel (130, 130', 140, 141, 143) est associé à un numéro d'appel de service du réseau de télécommunication (T, 100) dédié au dispositif de service (E_{A}, 200).

3. Procédé selon l'une des revendications précédentes, également **caractérisé en ce qu'**un réseau intelligent (110) est utilisé au moins partiellement pour la fourniture du dispositif d'analyse d'appel (130, 130', 140, 141, 143).

4. Procédé selon l'une des revendications précédentes, également **caractérisé en ce qu'**une procédure d'identification déclenchée ne sera désactivée qu'en réponse à l'écoulement d'un intervalle de temps (T₂) prédéterminé/prédéterminable, plus long par rapport à l'unité de temps (T₁), pendant lequel un volume d'appels inférieur à la valeur de seuil du volume d'appels est détecté de manière permanente.

5. Procédé selon l'une des revendications précédentes, également **caractérisé en ce que**, pour l'activation, une information de charge associée au dispositif de service (E_{A}, 200), comprenant l'unité de temps (T₁) et une valeur d'appel (R_{M}) représentant un nombre maximal d'appels appelant le dispositif de service, est transmise au dispositif d'analyse d'appel (130, 130', 140, 141, 143) pour la prédétermination de la valeur de seuil du volume d'appels.

6. Procédé selon la revendication précédente, également **caractérisé en ce qu'**un intervalle de temps (T₂) plus grand par rapport à l'unité de temps (T₁) est transmis au dispositif d'analyse d'appel et/ou l'intervalle de temps (T₂) est positionné par le dispositif d'analyse d'appel en dépendance fonctionnelle de l'unité de temps.

7. Procédé selon la revendication précédente, également **caractérisé en ce que**, en réponse à l'activation du dispositif d'analyse d'appel, un laps de temps respectif de l'unité de temps (T₁) est surveillé, et **en ce que**, en réponse à chaque appel vers le dispositif de service, un compteur d'appels (142) est incrémenté respectivement de un et comparé, au moins après écoulement de l'unité de temps (T₁), avec la valeur d'appel (R_{M}), un signal destiné à déclencher la procédure d'identification étant émis en réponse à une concordance entre le compteur d'appels et la valeur d'appel (R_{M}) et le compteur d'appels (142) étant remis à zéro en réponse à un laps de temps respectif de l'unité de temps (T₁).

8. Procédé selon la revendication précédente, également **caractérisé en ce que**, en réponse au déclenchement de la procédure d'identification, un écoulement respectif de l'intervalle de temps (T₂) est surveillé au moyen d'un compteur (143), et **en ce qu'**une procédure d'identification déclenchée n'est désactivée à nouveau qu'en réponse à l'écoulement d'un intervalle de temps (T₂) pendant lequel un volume d'appels inférieur à la valeur de seuil du volume d'appels est détecté de manière permanente.

9. Procédé selon la revendication précédente, également **caractérisé en ce que** le compteur (143) est remis à zéro en réponse à une concordance ou à un dépassement de la valeur du compteur d'appels par rapport à la valeur d'appel (R_{M}).

10. Procédé selon la revendication précédente, également **caractérisé en ce que**, pour l'exécution de la procédure d'identification, une information d'identification, communiquée lors de l'appel d'un terminal respectif appelant (E_{N}, 300) par l'intermédiaire du au moins un réseau de télécommunication (T, 100), est transmise au dispositif d'analyse d'appel (130, 130', 140, 141, 143), et **en ce que** l'information d'identification transmise est comparée avec la au moins une information d'identification stockée.

11. Procédé selon l'une des revendications précédentes, également **caractérisé en ce qu'**une information de ligne appelante ou CLI, des adresses IP et/ou une information basée sur le registre des abonnés locaux ou HLR sont utilisées comme information d'identification.

12. Procédé selon la revendication précédente, également **caractérisé en ce que**, en réponse à l'activation du dispositif d'analyse d'appel, un point de détection de déclenchement ou TDP est positionné pour le numéro d'appel du dispositif de service (E_{A}, 200), et **en ce que**, en réponse à la désactivation du dispositif d'analyse d'appel, le TDP positionné est supprimé.

13. Procédé selon la revendication précédente, également **caractérisé en ce que**, en réponse au point de détection de déclenchement ou TDP positionné, un signal d'indication d'appel (225) est envoyé au dispositif d'analyse d'appel par une unité de commutation (V_{T}, 103) du réseau de télécommunication (T, 100) suite à un appel vers le dispositif de service (E_{A}, 200) entrant à l'unité de commutation (V_{T}, 103), et **en ce que** le traitement de l'appel est suspendu jusqu'à la réception d'un signal de traitement d'appel (227) du dispositif d'analyse d'appel.

14. Procédé selon la revendication précédente, également **caractérisé en ce que** le signal d'indication d'appel comprend une information d'identification du terminal appelant.

15. Procédé selon l'une des revendications précédentes 13 ou 14, également **caractérisé en ce qu'**un signal de traitement d'appel (227) correspondant est transmis à l'unité de commutation (V_{T}, 103) par le dispositif d'analyse d'appel en fonction d'une analyse respective de l'appel afin d'empêcher ou de réacheminer l'appel.

16. Procédé selon l'une des revendications précédentes, également **caractérisé en ce que**, pour empêcher l'appel, celui-ci est interrompu avec ou sans signalisation au terminal appelant ou dirigé vers une file d'attente reliée au dispositif d'analyse d'appel, à partir de laquelle les appels mis en file d'attente ne sont réacheminés vers le dispositif de service qu'en réponse à une désactivation de la procédure d'identification.

17. Procédé selon l'une des revendications précédentes, également **caractérisé en ce que**, pour la prédétermination et/ou la mise à jour de paramètres de charge et/ou d'analyse d'appel y compris l'information d'identification à stocker et/ou l'activation et la désactivation du dispositif d'analyse d'appel, au moins une interface utilisateur (105) reliée à un réseau intelligent (110) du réseau de télécommunication (T, 100) est fournie.

18. Procédé selon la revendication précédente, également **caractérisé en ce qu'**un accès à un portail d'application (120) pour la prédétermination et/ou la mise à jour de paramètres de charge et/ou d'analyse d'appel, pour le choix de routines possibles d'empêchement d'appel et/ou pour l'activation et la désactivation du dispositif d'analyse d'appel est fourni par l'intermédiaire de l'interface utilisateur (105).

19. Système de filtrage automatisé de terminaux appelants (E_{N}, 300) lors de l'appel vers un dispositif de service (E_{A}, 200) par l'intermédiaire d'un réseau de télécommunication (T, 100), **caractérisé par** un dispositif d'analyse d'appel (130, 130', 140, 141, 143) apte à être associé au dispositif de service (E_{A}, 200) de manière que le dispositif d'analyse d'appel, après activation, soit associé à la détection d'un volume d'appels par rapport au dispositif de service par unité de temps prédéterminée/prédéterminable (T₁) et, en réponse à l'atteinte d'une valeur de seuil de volume d'appel prédéterminée/prédéterminable (R_{M}, T₁) en accédant à une base de données (140) dans laquelle est stockée au moins une information d'identification attribuable de manière univoque respectivement à au moins un terminal (E_{Nx}), au déclenchement de l'exécution d'une procédure d'identification pour chaque terminal appelant (E_{N}, 300) et, en réponse à l'identification d'un terminal appelant (E_{N}, 300), au déclenchement du blocage de l'appel souhaité du terminal identifié.

20. Système selon la revendication précédente, également **caractérisé en ce que** le dispositif d'analyse d'appel (130, 130', 140, 141, 143) est associé à un numéro d'appel de service du réseau de télécommunication (T, 100) dédié au dispositif de service (E_{A}, 200).

21. Système selon l'une des revendications précédentes, également **caractérisé en ce que** le dispositif d'analyse d'appel coopère avec une unité de stockage (141) pour la prédétermination d'une information de charge comprenant l'unité de temps (T₁) et une valeur d'appel (R_{M}) représentant un nombre maximal d'appels appelant le dispositif de service et avec un compteur d'appels (142) de manière que l'activation du dispositif d'analyse d'appel entraîne la surveillance de l'écoulement d'une unité de temps (T₁) respective, l'incrémentation de un du compteur d'appels (142) intervenant en réponse à chaque appel vers le dispositif de service, et une comparaison du compteur d'appels avec la valeur d'appel étant effectuée au moins après écoulement d'une unité de temps (T₁) respective, un signal de déclenchement de la procédure d'identification étant émis en réponse à une concordance entre le compteur d'appels et la valeur d'appel et le compteur d'appels (142) étant remis à zéro en réponse au laps de temps écoulé d'une unité de temps (T₁) respective.

22. Système selon la revendication précédente, également **caractérisé en ce que** le dispositif d'analyse d'appel coopère avec une unité de prédétermination et/ou de calcul d'un intervalle de temps (T₂) plus grand par rapport à l'unité de temps (T₁) ainsi qu'avec un compteur ou compteur de temps (143) pour la surveillance de l'intervalle de temps (T₂) et la désactivation d'une procédure d'identification déclenchée en réponse à l'écoulement d'un intervalle de temps pendant lequel un volume d'appels inférieur à la valeur de seuil du volume d'appels est détecté de manière permanente.

23. Système selon la revendication précédente, également **caractérisé par** une remise à zéro du compteur ou compteur de temps (143) en réponse à une concordance entre le compteur d'appels (142) et la valeur d'appel (R_{M}).

24. Système selon la revendication précédente qui, pour l'exécution de la procédure d'identification, transmet au dispositif d'analyse d'appel (130, 130', 140, 141, 143) une information d'identification communiquée lors de l'appel d'un terminal respectif appelant (E_{N}, 300) par l'intermédiaire du au moins un réseau de télécommunication (T, 100) pour qu'elle soit comparée avec la au moins une information d'identification stockée.

25. Système selon l'une des revendications précédentes, également **caractérisé en ce qu'**une information de ligne appelante ou CLI, des adresses IP et/ou une information basée sur le registre des abonnés locaux ou HLR sont aptes à être utilisées comme information d'identification.

26. Système selon l'une des revendications précédentes, également **caractérisé en ce que** le dispositif d'analyse d'appel est fourni au moins partiellement par des unités qui font partie d'un réseau intelligent (110) et/ou coopèrent avec un réseau intelligent (110) en utilisant des unités d'interface.

27. Système selon la revendication précédente, également **caractérisé en ce que** l'activation du dispositif d'analyse d'appel entraîne le positionnement d'un point de détection de déclenchement ou TDP pour le numéro d'appel du dispositif de service.

28. Système selon la revendication précédente, également **caractérisé par** une unité de commutation (V_{T}, 103) qui répond au point de détection de déclenchement ou TDP et qui, en coopération avec le dispositif d'analyse d'appel empêche ou réachemine un appel respectivement analysé.

29. Système selon l'une des revendications précédentes, également **caractérisé par** au moins une interface utilisateur (105) pour le dispositif de service, reliée à un réseau intelligent (110) du réseau de télécommunication (T, 100).

30. Système selon la revendication précédente, également **caractérisé par** un portail d'application (120) accessible par l'intermédiaire de l'interface utilisateur (105) pour la prédétermination et/ou la mise à jour de paramètres de charge et/ou d'analyse d'appel y compris l'information d'identification à stocker, pour le choix de routines possibles de blocage d'appel et/ou pour l'activation et la désactivation du dispositif d'analyse d'appel.

31. Système selon la revendication précédente, également **caractérisé par** une unité de commande ou logique (130, 130') coopérant avec le portail (120) pour déclencher une adaptation, un stockage et/ou une conversion d'informations de charge et/ou d'analyse d'appel spécifiques au dispositif de service, entrées par l'intermédiaire du portail.

32. Réseau intelligent conçu au moins partiellement pour fournir un dispositif d'analyse d'appel (130, 130', 140, 141, 143) ou pour coopérer avec celui-ci, destiné à fournir un système selon l'une des revendications 19 à 31, notamment pour la mise en oeuvre d'un procédé selon l'une des revendications 1 à 18.
